Europäisches Patentamt

European Patent Office

Office européen des brevets

(19)

(11) Veröffentlichungsnummer: **0 016 311**
**B1**

(12) **EUROPÄISCHE PATENTSCHRIFT**

(45) Veröffentlichungstag der Patentschrift:
**12.01.83**

(51) Int. Cl.³: **F 16 F 1/02,** H 01 F 7/22

(21) Anmeldenummer: **80100298.1**

(22) Anmeldetag: **22.01.80**

(54) **Federelement.**

(30) Priorität: **16.03.79 DE 2910354**

(43) Veröffentlichungstag der Anmeldung:
**01.10.80 Patentblatt 80/20**

(45) Bekanntmachung des Hinweises auf die Patenterteilung:
**12.01.83 Patentblatt 83/2**

(84) Benannte Vertragsstaaten:
**CH FR GB IT**

(56) Entgegenhaltungen:

**DE-A-2 260 437**
**FR-A-780 704**
**FR-A-1 091 672**
**US-A-2 650 819**

(73) Patentinhaber: **Kernforschungszentrum Karlsruhe GmbH, Weberstrasse 5, D-7500 Karlsruhe 1 (DE)**

(72) Erfinder: **Förster, Siegfried, Kolbergerstrasse 28 e, D-7500 Karlsruhe (DE)**
Erfinder: **Friesinger, Günter, Mannheimer Strasse 12, D-7514 Eggenstein-Leopoldshafen (DE)**

ACTORUM AG

## Federelement

Die Erfindung betrifft ein Federelement für den Einsatz in Gehäuse von supraleitenden Spulen, welches bei einer von der Temperatur des Ausgangszustandes abweichenden Temperatur auf die Spule form- und kraftschlüssig einwirkt.

Beim Fügen von Bauteilen unterschiedlicher Dilatation treten bei Temperaturänderungen Wegänderungen auf. Als Folge dieser Wegänderungen kommt es in einer Struktur zum Verlust der Vorspannung und/oder zu Spiel. Im Bereich kryogener Temperaturen müssen supraleitende (SL-) Kabel und SL-Wicklungen mit ihrer Isolation kraftschlüssig in einer Struktur (z.B. einem Gehäuse) eingebaut werden, damit Leiterbewegungen, die einen Übergang in die Normalleitung (Quench) auslösen können, vermieden werden. Dies kann Kräfte bzw. Drücke zur Folge haben, welche z. B. im toroidalen Magnetfeld eine Grössenordnung von ca. $1{,}67 \cdot 10^6$ Newton annehmen, und weiterhin Kräfte bei unsymmetrischen Betrieb und Kräfte durch Dehnung der Wicklung in radialer Richtung von ca. 1,5 mm. Das bedeutet, dass die angeführten Kräfte bei der Betriebstemperatur von 4,2 K kraftschlüssig vom Spulengehäuse aufgenommen werden müssen. Das führt zu einer Belastung des Spulengehäuses durch verhinderte Schrumpfung, da die thermische Schrumpfung des Spulengehäuses grösser bzw. höchstens gleich sein muss der Schrumpfung des Wickelpaketes. Diese Werte können in Praxis nicht beliebig angepasst werden. Im Quenchfall beträgt der He-Innendruck sogar 21 bar. Da die dünnwandige Leiterhülle den Innendruck nicht aufnehmen kann, müssen die äusseren Lagen der Spulenwicklung allseitig vom Spulengehäuse gestützt werden.

Diese Festlegung der SL-Kabel und SL-Wicklungen in einer Struktur (z. B. Alu- oder Edelstahlgehäuse) wird demnach durch die unterschiedliche thermische Konstruktion zwischen Wicklung und Gehäuse erschwert. Im Falle der TESPE- und LCP-Wicklung sind Spalte in der Grössenordnung von 200 μm bei Abkühlung von $T=293$ K auf $T=4{,}2$ K zu erwarten.

Das Problem wurde bisher nur teilweise gelöst. So wurden Alu-Schrumpfringe, Invar-Druckstäbe, Doppelkeile aus unterschiedlich schrumpfenden Werkstoffen, mit hoch gefülltem Harz aufgeblasene Edelstahlkissen und Werkstoffe mit negativem thermischen Ausdehnungskoeffizient verwendet, um dem Problem nahezukommen. Diese Vorschläge weisen jedoch alle Nachteile auf, da sie einerseits bei nicht kreisförmigen Wicklungsquerschnitten nur bedingt anwendbar sind, grosse Einbaulänge zur Kompensation der unterschiedlichen Wärmedehnungen erforderlich machen, wodurch Stabilitätsprobleme durch Einbaulänge und ein flächiger Einbau unmöglich wird, und andererseits wird ein höherer Platzbedarf notwendig, die Reibung ist beträchtlich, eine Vorspannung kann nicht aufgebracht werden und die zulässige Druckspannung in Verstärkungsrichtung wird geringer als senkrecht zur Verstärkungsrichtung.

Mit den in der FR-A-780'704 beschriebenen Federn können diese Probleme ebenfalls nicht gelöst werden. Sie sind zwar als Bestandteile von elektrischen Kreisen geeignet, dürfen aber aus einem oder mehreren Teilen bestehen und müssen unter normalen Bedingungen eine gewisse Bewegungsfreiheit besitzen.

Die der Erfindung zugrundliegende Aufgabe besteht dahingegen darin, ein Federelement zu bieten, welches im Normalzustand bewegungsunfrei eingespannt ist und erst beim Abkühlen von hoher Temperatur auf sehr niedere Temperatur bzw. umgekehrt eine Dickenvergrösserung bzw. Verkleinerung erhält und dabei eine Federkraft auf diejenigen Bauteile ausübt, die Gefahr laufen, sich aus einer zuvor festen Halterung zu lockern.

Die Aufgabe wird erfindungsgemäss durch die Massnahmen, wie sie in den Merkmalen des Anspruches 1 beschrieben sind, gelöst. Eine Ausgestaltungsform der Erfindung ist im Unteranspruch 2 beschrieben.

Die besonderen Vorteile der Erfindung bestehen einerseits darin, dass beim Abkühlen Formschluss zwischen Wicklung und Gehäuse erreicht wird, wenn die Bauteile bei Montage ($T=293$ K) mit einem Spalt entsprechend dem maximalen Federweg eingebaut werden und andererseits Kraftschluss beim Abkühlen erzeugt wird, wenn die Bauteile bei $T=293$ K formschlüssig montiert sind. Bei entsprechend hohen Fertigungstoleranzen kann eine vorausberechenbare Vorspannung auf die Wicklung gebracht werden.

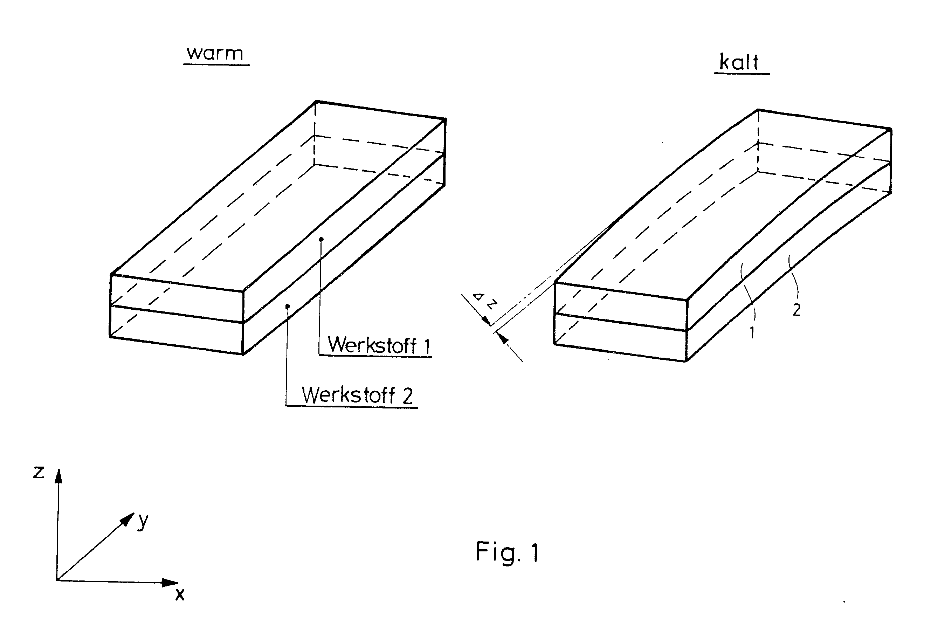

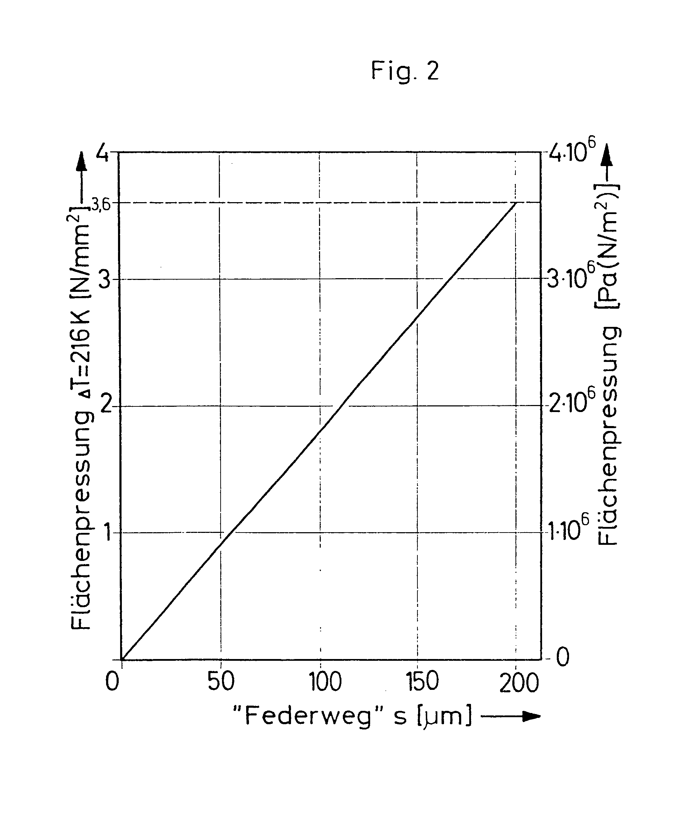

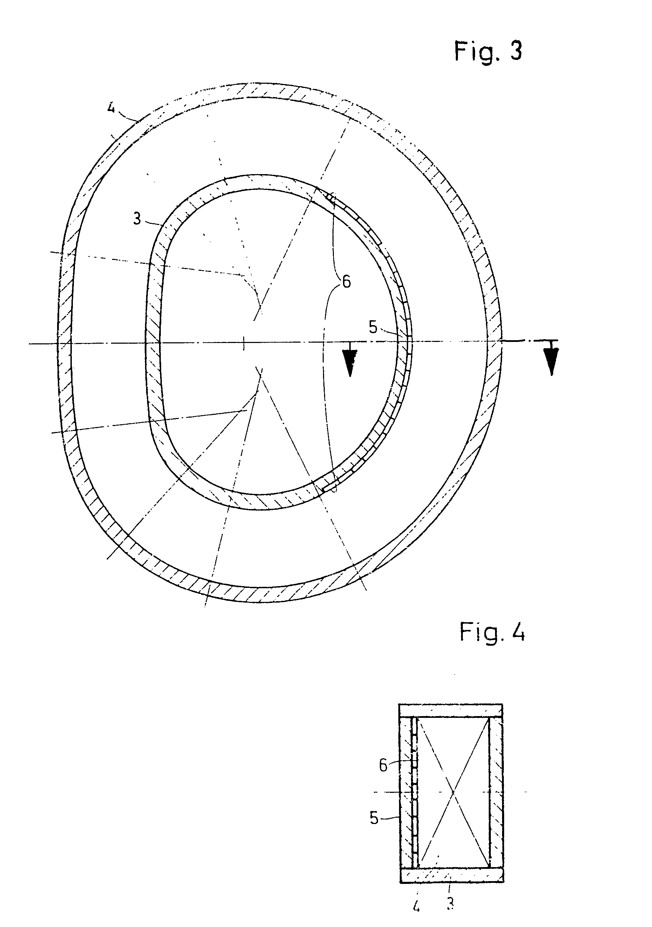

Die Erfindung wird im folgenden anhand eines Ausführungs- und Anwendungsbeispiels mittels der Fig. 1 bis 4 näher erläutert. Hierbei stellt die Fig. 1 nebeneinander das erfindungsgemässe Federelement im warmen und kalten Zustand dar, die Fig. 2 gibt den Verlauf der Flächenpressung über den Federweg wieder, die Fig. 3 zeigt einen Schnitt durch das Anwendungsbeispiel einer supraleitenden Spule und die Fig. 4 gibt einen Schnitt senkrecht zum Schnitt nach Fig. 3 wieder.

Das Federelement nach Fig. 1 besteht aus einem Stück 1 Flachmaterial aus Werkstoff mit geringer Dilatation, das über eine nichtlösbare Verbindung mit einem Stück 2 Flachmaterial aus anderem Werkstoff mit relativ hoher Dilatation zusammengefügt ist (linke Seite).

Beim Abkühlen des Bauelementes 1, 2 (rechte Seite), entsteht eine Krümmung $\Delta z$, die abhängig ist von der unterschiedlichen Dilatation der Werkstoffe und von der Geometrie der Bauteile 1 und 2.

Das Bauelement 1, 2 wird als 2fach frei aufliegender Balken betrachtet; im Gegensatz zu den üblichen Bimetallanwendungen, die als einseitig festeingespannter Träger (z. B. in einem Relais) betrieben werden. Hiermit ist die Dickenänderung $\pm \Delta z$ reproduzierbar möglich.

Zum Nachweis der Funktion wurden 6 Proben folgendermassen gefertigt:

Ein Stück 2 Flachmaterial aus Edelstahl

(Dilatation $\dfrac{L_{293}-L_4}{L_{293}} = 290 \cdot 10^{-5}$) ist mit einem

Stück 1 Flachmaterial aus Invar ($\dfrac{L_{293}-L_4}{L_{293}} = 50 \cdot 10^{-5}$) über eine Elektronenstrahlschweissnaht verbunden. Beim Abkühlen von T=293 K auf T=4,2 K schrumpft die Edelstahlseite 2 stärker als das Invar 1, so dass sich eine konkave Krümmung (seitliche Auslenkung), beim Blick auf die Edelstahlseite, ergibt.

Wird das Bauelement 1, 2 bei T=293 K formschlüssig eingebaut, so ergibt sich beim Abkühlen eine Kraft $F_z$ (wegen Federweg s [μm]) z. B. eine Flächenpressung $p_z = F_z/A$ mit $A = b_x \cdot L_y$ gemäss Fig. 2 (Koordinaten x, y, z in Fig. 1). Für die Durchbiegung ($\triangle$ Dickenänderung $+ \Delta z$) wurde über einfache Geometriebeziehung bei den in Fig. 1 wiedergegebenen Abmessungen ein $\Delta z = 0,3$ mm vorausberechnet. Gemessen wurde bei Abkühlung von T=293 K auf T=77 K ein $\Delta z$ von 0,2 mm.

Vorausberechnet wurde weiterhin eine Kraft $F_z = 2770$ N und eine vorhandene Biegespannung $\sigma_b = 570$ N/mm². In $\sigma_b$ ist der Eigenspannungsanteil durch die Elektronenstrahlschweissung nicht enthalten. Gemessen wurde bei Abkühlung von T=293 K auf T=77 K eine Kraft $F_z = 2000$ N an 2 Proben mit je 10 thermischen Zyklen; also praktisch Übereinstimmung.

Die Bauhöhe (Dicke z) konnte klein gehalten werden durch die «Umlenkung» (seitliche Auslenkung s.o.) des Schrumpfeffektes aus der y- in die z-Richtung.

Das Fügeverfahren Elektronenstrahlschweissen wurde gewählt, um die Eigenspannungen möglichst klein zu halten.

Die bei diesen Proben gewählten Abmessungen h=4 mm, b=8 mm, 1=60 mm sowie die Werkstoffe Edelstahl und Invar (gem. Fig. 1) sind durchaus noch optimierbar.

Bei der Erfindung, dem thermischen Federelement, wird somit beim Abkühlen eine Dickenänderung $+ \Delta z$ bzw. eine Kraft $F_z$ erreicht im Gegensatz zu den bekannten Bauelementen (z. B. Feder, Invarstab), bei denen die Dickenänderung $- \Delta z$ auftritt.

Das Bauelement 1, 2 beansprucht im Vergleich zu den bekannten Lösungen wenig Einbauraum.

Das Bauelement 1, 2 kann bei allen Problemen, bei denen Bauelemente unterschiedlicher Dilatation in wechselnden Temperaturbereichen betriebssicher gefügt werden müssen, eingesetzt werden. Z. B. kann das Bauelement 1, 2 bei SL-Kabel und SL-Wicklungen 4 (s. Fig. 3 D-förmiger Spulenquerschnitt) gezielt zur Vermeidung von Leiterbewegungen eingebaut werden. Es kann aufgrund seiner Abmessungen entsprechend den örtlichen Kräfteverhältnissen in der Spule 4 in entsprechenden Stückzahlen flächig (Bereich 6) eingebaut werden. Zweckmässigerweise würde das z. B. bei einer D-Spule 4 auf den konvexen Seiten 5 des Gehäuses 8 bzw. der Wicklung geschehen, die beim Auferregen entlastet werden. Eine sichere reproduzierbare Festlegung der Wicklung wird bereits beim Abkühlen der Spule 4 erreicht (s. Fig. 4). Die Flächenpressung ist vorausberechenbar, so dass Beanspruchungen, die über der Dauerwechselfestigkeit der schwächsten Komponenten (z. B. Pb-Sn-Lot bei lotvergossenen Supraleitern) liegen, sicher vermieden werden.

## Patentansprüche

1. Federelement für den Einsatz in Gehäuse von supraleitenden Spulen, welches bei einer von der Temperatur des Ausgangszustandes abweichenden Temperatur auf die Spule form- und kraftschlüssig einwirkt, gekennzeichnet durch ein Stück (1) Flachmaterial aus einem Werkstoff mit geringer Dilatation und einem zweiten Stück (2) Flachmaterial aus einem Werkstoff mit relativ hoher Dilatation, welche unlöslich miteinander verbunden sind, und durch eine zweifach frei aufliegende Anbringung zwischen Teilen der Gehäusewandung (5) und der Spule (4).

2. Federelement nach Anspruch 1, gekennzeichnet durch eine flächenhafte Anbringung (6) im konvexen Bereich (5) eines D-förmigen Gehäuses (3).

## Claims

1. Spring element for installation in boxes of superconducting coils, acting through form closure and force closure on the coil at a temperature deviating from the temperature of the initial condition, characterized by a piece (1) of flat material made of a low dilatation material and a second piece (2) of flat material made of a relatively high dilatation material undetachably coupled to each other, and by a dual suspension between parts of the box wall (5) and the coil (4).

2. Spring element according to claim 1, characterized by surface mounting (6) in the convex zone (5) of a D-shaped box (3).

## Revendications

1. Elément à ressort pour mise en œuvre dans les boîtiers de bobines de supraconducteur, commandant mécaniquement la bobine à une température différente de la température de l'état initial, élément caractérisé par une pièce (1) plate en un matériau à faible dilatation et une deuxième pièce (2) plate en un matériau à dilatation relativement élevée, qui sont reliées entre elles de façon inamovible, et par un montage jumelé libre entre les parties de la paroi (5) du boîtier et de la bobine (4).

2. Élément selon la revendication 1, caractérisé par une adjonction (6) adhérant à la surface dans la zone (5) convexe d'un boîtier (3) en forme de D.

warm

kalt

Werkstoff 1

Werkstoff 2

Δz

1

2

z

y

x

Fig. 1

0 016 311

## Fig. 2

Fig. 3

Fig. 4